# EUROPEAN PATENT SPECIFICATION

(11) **EP 0 494 304 B1**
(45) Date of publication and mention of the grant of the patent: **07.09.1994**
(21) Application number: 90914422.2
(22) Date of filing: 26.09.1990
(51) Int. Cl.: B29C 45/23, F16K 39/06

(54) **ROTARY VALVE OF INJECTION MOLDING MACHINE**
DREHVENTIL FÜR SPRITZGIESSMASCHINE
SOUPAPE ROTATIVE POUR MACHINE DE MOULAGE PAR INJECTION

(30) Priority: 27.09.1989 JP 113978/89 U
(43) Date of publication of application: 15.07.1992
(73) Proprietor: Komatsu Ltd., Minato-ku Tokyo 107 (JP)
(72) Inventor: YOKOTA, Akira, Hirakata-shi Osaka 573 (JP); TANAKA, Nobukazu, Hirakata-shi Osaka 573 (JP)
(74) Representative: Viering, Jentschura & Partner
(86) International application number: JP9001236
(87) International publication number: WO9104841

(56) References cited:
- DE-B- 1 111 472
- DE-C- 737 843
- JP-A- 1 113 218
- JP-A-62 278 008
- JP-U- 191 514
- US-A- 2 229 932
- US-A- 3 026 567
- US-A- 3 430 919
- US-A- 4 658 859

## Description

### FIELD OF THE INVENTION

The present invention relates to a rotary valve for an injection molder, and more particularly to a rotary valve provided in a molten resin passage into which molten resin is forced so as to flow from the screw side to the nozzle side and having a so-called "cock structure" to open and close the molten resin passage, the injection molder being so designed that the resin which has been melted and plasticized in a cylinder is forced into a mold by way of the nozzle in order to produce resinous products, according to the preamble of claim 1 and known from US-A-3,026,567.

### BACKGROUND ART

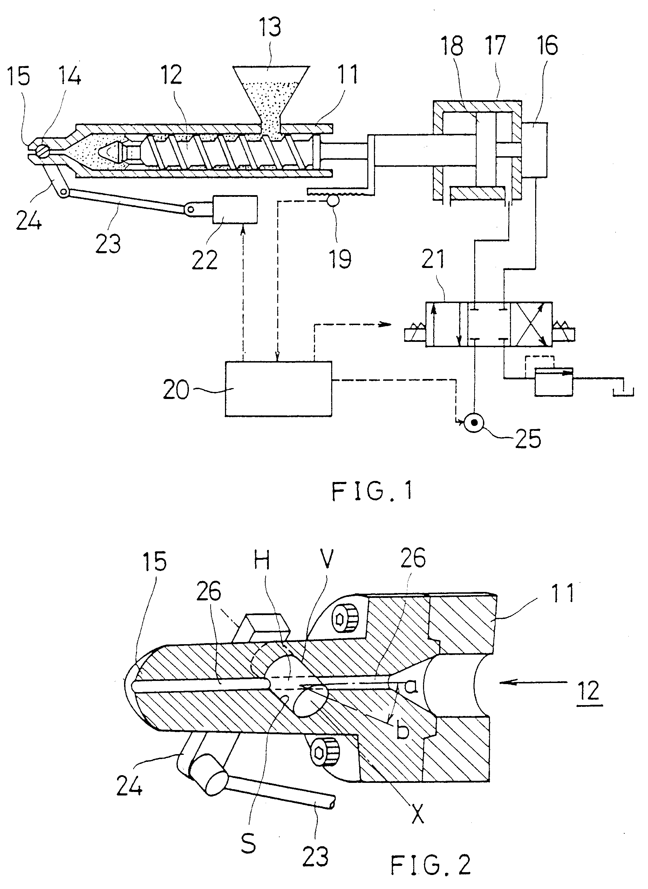

The above-described conventional rotary valve, one example of which is disclosed in Japanese Patent Laid Open Publication No. 63-297012, has been generally and widely used for an injection molder. With reference to Figs. 1 and 2, an injection molder will be outlined.

A screw 12 provided in a cylinder 11 melts and mixes, within the heated cylinder 11, resin pellets fed from a hopper 13 and forces the molten resin into a mold (not shown) by way of a rotary valve 14 and a nozzle 15. The revolution speed of the screw 12 is controlled by the inflow of hydraulic oil supplied to a hydraulic driving motor 16. The to and fro movement of the screw 12 with respect to the nozzle 15 is carried out by controlling the supply and exhaust of hydraulic oil to a piston 18 disposed within a hydraulic cylinder 17. The supply and exhaust of hydraulic oil is controlled by operating a switching valve 21 with a control unit 20 based on positional data supplied from a piston position sensor 19. The ON-OFF control of the operation for forcing molten resin through the nozzle 15 into a mold as well as the control of the amount of forced resin is performed by opening adjustment. The opening adjustment includes the opening/closing operation of the rotary valve 14, the operation being performed through levers 23 and 24 by means of a valve driving mechanism 22 controlled by the control unit 20. The valve driving mechanism 22, is any one suitably selected from a hydraulic cylinder, air cylinder, servo motor etc. The reference numeral 25 denotes a hydraulic pump controlled by the control unit 20.

Referring now to Fig. 2, the above rotary valve 14 will be explained.

Disposed inside a molten resin passage 26, into which the resin which has been melted and plasticized in the cylinder 11 is forced by the screw 12 so as to flow from the screw 12 side towards the nozzle 15 side, is a cylindrical valve chamber S with an axis X in a transverse direction with respect to the molten resin passage 26. A cylindrical valve body V is fitted in the cylindrical valve chamber S such that the axis of the cylindrical valve body V coincides with the axis X. The cylindrical valve body V has a through hole H which penetrates the cylindrical valve body V in a radial direction and has a diameter substantially equal to that of the molten resin passage 26 so that the molten resin passage 26 communicates with the through hole H. The cylindrical valve body V is designed to be rotatable about the axis X, by means of the levers 23 and 24 engaged therewith, in a reciprocating sliding manner between an open-state position a and a closed-state position b, as indicated by the arrow. When the cylindrical valve body V is at the open-state position a, the through hole H is located at a communicating position to open the molten resin passage 26, thereby making communication between the screw 12 side and nozzle 15 side of the molten resin passage 26. When the cylindrical valve body V is at the closed-state position, the through hole H is located at a non-communicating position to close the molten resin passage 26. The rotary valve 14 is composed of the through hole H, the cylindrical valve chamber S, the cylindrical valve body V etc.

Such a rotary valve 14, however, has the following disadvantage.

When a clearance provided between the inner circumferential surface of the cylindrical valve chamber S and the outer circumferential surface of the cylindrical valve body V for accommodating the sliding rotation of the cylindrical valve body V is made small, the cylindrical valve chamber S comes in direct contact with the cylindrical valve body V, creating a contact area. This results in such unfavourable situations where a large driving torque is required as a driving torque for the cylindrical valve body V and, in the worst case, it becomes impossible to drive the cylindrical valve body V. One of the reasons for the creation of the contact area is as described below. The small clearance for the sliding rotation increases the area where the cylindrical valve chamber S contacts with the cylindrical valve body V in a sliding manner, so that the molten resin functioning as a lubricant between the cylindrical valve chamber S and the cylindrical valve body V is lessened. This causes a so-called "scuffing phenomenon" between the metallic material of the cylindrical valve chamber S and that of the cylindrical valve body V. As a result, there occurs uneven wear on the circumferential surfaces of the cylindrical valve chamber S and the cylindrical valve body V.

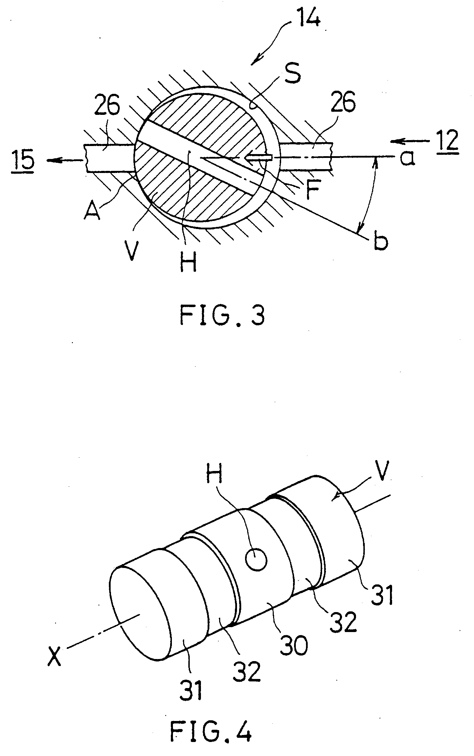

As shown in Fig. 3, when an eccentric force F developed from a resin pressure acts, from the screw 12 side, on the circumferential surface of the cylindrical valve body V at the screw 12 side through the molten resin passage 26, in other words, when the resin is about to be forced out with the through hole H being still at the non-communicating position (i.e., the cylindrical valve body V is at the closed-state position b), or when a back pressure by the screw 12 is working, the cylindrical valve body V is offcentered to the nozzle 15 side (i.e., to the left in Fig. 3) and pressed against the inner circumferential surface of the cylindrical valve chamber S. The driving torque required for rotating the cylindrical valve body V toward the open-state position in the above case is twenty times as much as that of the case where the eccentric force F does not act. The following factors are considered to be the cause of the above situation: One is a large contact area A caused by the eccentric force F, the area covering a considerably large circular arc of the outer circumference of the cylindrical valve body V along the axis thereof. The other factor is that a resin layer, which is located between the sliding contact surfaces and becomes very thin because of the eccentric force F at the contact area A of the cylindrical valve chamber S and the cylindrical valve body V, is discomposed and partially carbonated by heat, causing a so-called "seizing" phenomenon.

In order to solve the above problem caused by the small clearance for the sliding rotation, an attempt has been made by making the clearance large whereby the area where the cylindrical valve chamber S contacts with the cylindrical valve body V in a sliding manner is reduced to allow the molten resin functioning as a lubricant to spread over the substantially entire outer circumferential surface of the cylindrical valve body V. Although this arrangement facilitates the sliding rotation of the cylindrical valve body V, there arises such a disadvantage that the amount of molten resin leaking through the clearances at both ends of the rotary valve 14 increases and the resin adheres to the peripheral area of the nozzle 15, causing various problems.

Many solutions have been conventionally proposed. Specifically, while the clearance is made small to cope with the above disadvantage, a special material with high hardness, such as high speed steel is used for the cylindrical valve body V to prevent "scuffing". Alternatively, the cylindrical valve body V is plated with hard materials such as Ni-group materials or Ni-group materials containing P/Si. However, such measures are not satisfactory and fundamental solutions to the above problem since they cost high and some of them cannot sufficiently reduce the driving torque required for the cylindrical valve body V.

In order to overcome the foregoing difficulties, the present invention provides an improved rotary valve for an injection molder, which contributes to lower cost and sufficiently reduces the driving torque required for the cylindrical valve body V.

### DISCLOSURE OF THE INVENTION

According to the invention, a rotary valve for an injection molder provided with a molten resin passage into which molten resin is forced so that it flows from a screw side to a nozzle side, comprising a cylindrical valve chamber having an axis in a transverse direction with respect to the molten resin passage; and a cylindrical valve body disposed and fitted in the cylindrical valve chamber so as to have the same axis as that of the cylindrical valve chamber, the cylindrical valve body having a through hole piercing therethrough in a radial direction so as to communicate with the molten resin passage, and being rotatable about its axis in a sliding reciprocating manner between an open-state position at which the through hole is in a communicating position to open the molten resin passage and a closed-state position at which the through hole is in a non-communicating position to close the molten resin passage is characterized by:
circumferential grooves provided in a circumferential surface area of the cylindrical valve body such that they extend in a circumferential direction thereof and are aligned in an axial direction thereof with the through hole between.

It is preferable in view of the fabrication of the valve that the above circumferential grooves provided in the circumferential surface area of the cylindrical valve body are formed on the outer circumference of the cylindrical valve body, but they may be formed on the inner circumference of the cylindrical valve chamber or on both of them.

With the above arrangement, a sufficient amount of molten resin functioning as a lubricant always exists in the circumferential grooves, that is, between the inner circumferential surface of the cylindrical valve chamber and the outer circumferential surface of the cylindrical valve body even when the cylindrical valve body is off-centered and pressed against the inner circumferential surface of the cylindrical valve chamber. Further, even if an eccentric force developed from resin pressure acts, from the molten resin passage at the screw side, on the cylindrical valve body so that it is off to the nozzle side and pressed against the inner circumferential surface of the cylindrical valve chamber, the resin pressure is transmitted to the circumferential grooves by way of a clearance formed, by the eccentricity, between the inner circumferential surface of the cylindrical valve chamber and the outer circumferential surface of the cylindrical valve body, at the screw side. Hence, the resin pressure in the circumferential grooves substantially evenly acts on the cylindrical valve body from its entire circumference and also works as a reactive force of the cylindrical valve body, reducing the eccentric force. Therefore, even when a clearance for the sliding rotation is made small in order to prevent the leakage of the molten resin therefrom, the cylindrical valve body can smoothly rotate in a sliding manner. As a result, there is no need to employ special hard materials or apply hard plating for avoiding "scuffing". This advantage contributes to the reduction of the production cost. Also, the driving torque required for the cylindrical valve body can be adequately reduced.

In order to efficiently perform the transmission of the resin pressure and reduce the eccentric force, a first communicating path may be preferably provided. The first communicating path is formed on the cylindrical valve body along the axis thereof and makes an opening side of the through hole, which is positioned at the nozzle side when the cylindrical valve body is at the open-state position to open the molten resin passage, communicate with the circumferential grooves. With this arrangement, the resin pressure can be transmitted, without receiving much resistance, via the through hole and the first communicating path to the circumferential grooves. The first communicating path may be a communicating groove formed on the outer circumference of the cylindrical valve body.

Further, it is preferable to provide a second communicating path in order to efficiently transmit the resin pressure via the through hole etc. to the circumferential grooves when the cylindrical valve body is at the closed-state position. The second communicating path is formed on the circumferential surface area of the cylindrical valve body. When the cylindrical valve body is at the closed-state position, the second communicating path makes an opening of the through hole, which is positioned at the screw side when the cylindrical valve body is at the open-state position to open the molten resin passage, communicate with an opening of the molten resin passage which is positioned at the screw side, facing to the cylindrical valve chamber. The second communicating path may be formed by increasing the open area of the through hole at the screw side. Further, the second communicating path may be a communicating groove formed on the outer circumference of the cylindrical valve body and/or the inner circumference of the cylindrical valve chamber in a circumferential direction.

### BRIEF DESCRIPTION OF DRAWINGS

Figs. 1 through 3 are provided for explaining a rotary valve for an injection molder.

Fig. 1 is a semi-diagrammatical vertical section of the whole structure of the injection molder.

Fig. 2 is a perspective vertical section of the injection molder, illustrating the forward end part thereof including the rotary valve.

Fig. 3 is a schematic sectional view of the rotary valve in its eccentric state.

Figs. 4 through 14 are provided for explaining preferable embodiments of a rotary valve for an injection molder according to the invention.

Fig. 4 is a perspective view of a cylindrical valve body of a first embodiment of the invention.

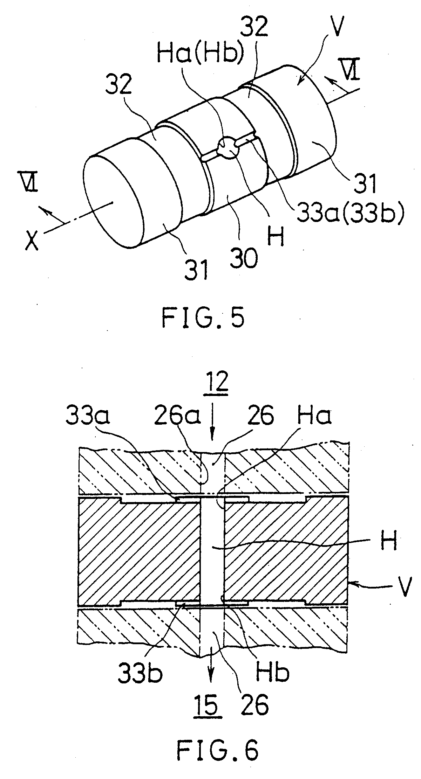

Fig. 5 is a perspective view of a cylindrical valve body of a second embodiment.

Fig. 6 is a schematic sectional view taken on line VI-VI in Fig. 5.

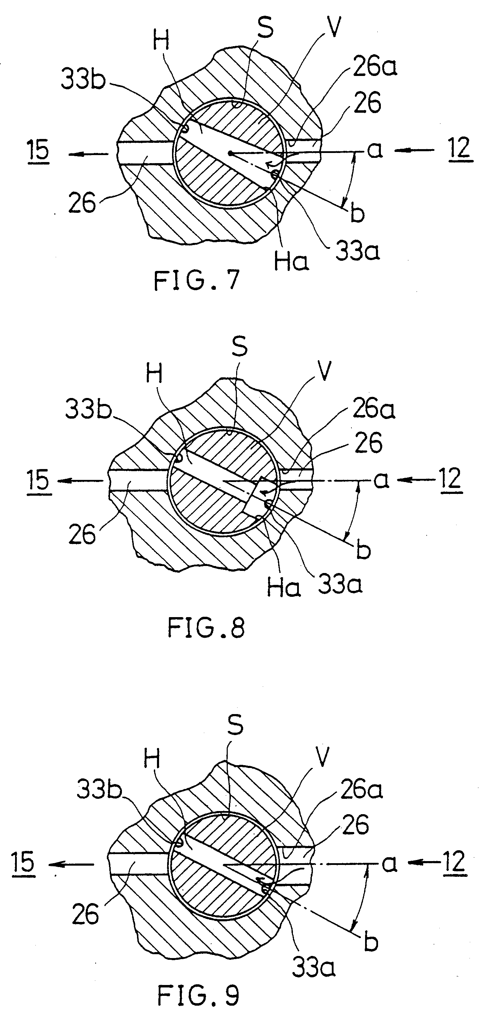

Figs. 7 through 9 are partially sectional views each showing a modified example of the second embodiment.

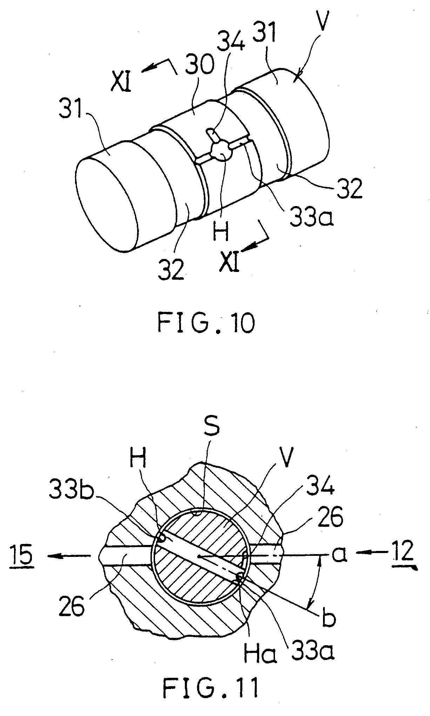

Fig. 10 is a perspective view of a cylindrical valve body of another modified example of the second embodiment.

Fig. 11 is a partially sectional view taken on line XI-XI in Fig. 10.

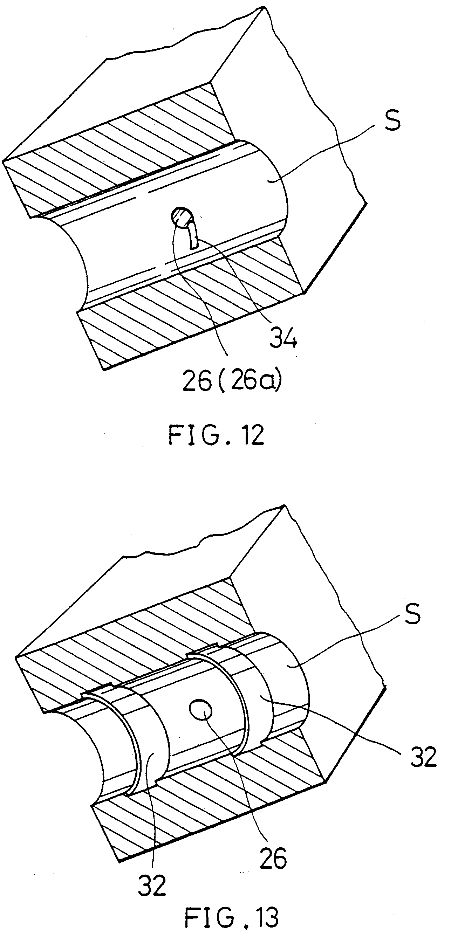

Fig. 12 is a perspective view of a cylindrical valve chamber of a changed modification of the second embodiment, illustrating the half part thereof on the screw side.

Fig. 13 is a perspective view of a cylindrical valve chamber of a changed modification of the first embodiment, showing the half part thereof on the screw side.

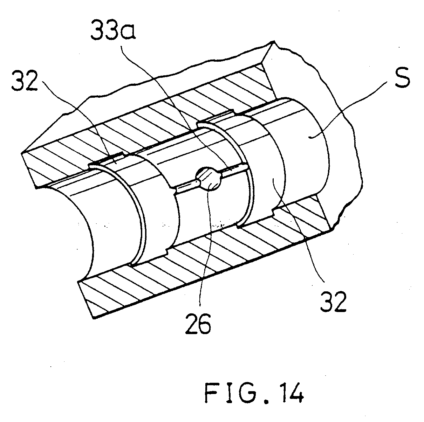

Fig. 14 is a perspective view of a cylindrical valve chamber of a changed modification of the second embodiment, showing the half part thereof on the screw side.

### THE BEST MODE FOR CARRYING OUT THE INVENTION

Referring now to the drawings, embodiments of a rotary valve for an injection molder according to the invention will be described below.

### (First Embodiment)

As shown in Fig. 4, a cylindrical valve body V comprises a centre part 30 on which a through hole H is defined penetrating the cylindrical valve body V in a transverse direction with respect to an axis X of the cylindrical valve body in (i.e., in a radial direction of the cylindrical valve body V); end parts 31 aligned in the axial direction X; and circumferential grooves 32 which extend in a circumferential direction and are aligned in the axial direction X with the through hole H between. The centre part 30 and the end parts 31 respectively have a larger diameter while the circumferential grooves 32 respectively have a smaller diameter. The small diameter parts (the circumferential grooves 32) are respectively positioned between the large diameter parts (the centre part 30, the end parts 31). Since the end parts 31 are arranged to have a larger diameter, the clearance between the inner circumferential surface of a cylindrical valve chamber S and the outer circumferential surface of the cylindrical valve body V is very narrow so that the leakage of molten resin from both sides of the cylindrical valve body V can be prevented.

According to the first embodiment, when the cylindrical valve body V is at a closed-state position b, and resin pressure is exerted on the cylindrical valve chamber S through a molten resin passage 26 at the screw 12 side, an eccentric force F developed from the resin pressure shifts the centre of the cylindrical valve body V towards a nozzle 15 and presses the cylindrical valve body V to the inner circumferential surface of the cylindrical valve chamber S at the nozzle 15 side as shown in Fig. 3. At that time, owing to the eccentricity, the resin pressure is transmitted over the entire circumferences of the circumferential grooves 32 by way of a clearance formed between the inner circumferential surface of the cylindrical valve chamber S and the outer circumferential surface of the cylindrical valve body V, at the screw 12 side.

Thereafter, the resin pressure transmitted over the circumferences of the circumferential grooves 32 acts on the cylindrical valve body V substantially evenly from its circumference. The resin pressure also works as a reactive force against the eccentric force F so that the eccentric force F is reduced.

The rotary valve 14 for an injection molder described in the first embodiment is particularly suited for cases where molten synthetic resinous materials having comparatively low viscosity such as polypropylene, polyoxymethylene(acetal resin), polyamide 6 (nylon 6), polyamide 66 and poly-phenylenesulfide are used. In the case of using such molten synthetic resinous materials, the resin pressure can be substantially evenly transmitted over the entire circumferences of the circumferential grooves 32 through the clearance created by the eccentricity, only by making the circumferential grooves 32 a little deeper (e.g., a depth of 0.1mm to 1mm).

### (Second Embodiment)

As shown in Figs. 5 and 6, lateral grooves 33a and 33b are carved in the direction of the axis X at the centre part 30 of the cylindrical valve body V, in addition to the circumferential grooves 32 described in the first embodiment. The lateral grooves 33a and 33b are communicating paths for allowing an opening Ha of the through hole H at the screw 12 side and an opening Hb at the nozzle 15 side (i.e., the opposing side of the screw 12 side) to communicate with the circumferential grooves 32.

According to the second embodiment, as shown in Fig. 3, when the cylindrical valve body V is at the closed-state position b, and the eccentric force F causes the cylindrical valve body V to be off-centered and pressed against the inner circumferential surface of the cylindrical valve chamber S at the nozzle 15 side like the first embodiment, the resin pressure is directly transmitted to the circumferential grooves 32 through the clearance formed by the eccentricity, and indirectly transmitted to the same through the clearance, the opening Ha of the through hole H and/or the lateral groove 33a at the screw 12 side. Further, the resin pressure is transmitted to the circumferential grooves 32 receiving less resistance by way of the clearance, the through hole H, the opening Hb of the through hole H and the lateral groove 33b at the nozzle 15 side. Other details are the same as the first embodiment.

By the use of the rotary valve 14 for an injection molder of the second embodiment, the resin pressure can be easily transmitted to the circumferential grooves 32 even when molten synthetic resinous materials with comparatively high viscosity are used. Therefore, the rotary valve 14 of the second embodiment is particularly suited for cases where high-viscosity materials are used. This also allows the circumferential grooves 32 to be considerably shallow (e.g., a depth of 0.01mm to 0.1mm). A communicating hole may be used as the communicating path for making the opening Hb of the through hole H at the nozzle 15 side communicate with the circumferential grooves 32.

In the second embodiment, when the cylindrical valve body V is at the closed-state position b, the through hole H indirectly communicates with an opening 26a of the molten resin passage 26 at the nozzle 12 side through the clearance, the opening 26a facing to the cylindrical valve chamber S. The through hole H may be tapered down to the nozzle 15 side so as to form a tapered annular passage as shown in Fig. 7. Alternatively, as shown in Fig. 8, the through hole H may be arranged in a T-shape so that it is narrowed at the nozzle 15 side. With the arrangements shown in Figs. 7 and 8, the area of the opening Ha of the through hole H at the screw 12 side is increased such that the through hole H directly communicates with the opening 26a even when the cylindrical valve body V is at the closed-state position b, and, as a result, the resin pressure can be more actively transmitted to the circumferential grooves 32 via the through hole H. In order to achieve the same effect as described above, the diameter of the molten resin passage 26 at the screw side 12 may be increased as shown in Fig. 9, or a vertical groove 34 may be carved in a circumferential direction at the centre part 30 of the cylindrical valve body V as shown in Figs. 10 and 11. The vertical groove 34 is a path communicating with the opening Ha of the through hole H. This vertical groove 34 may be provided, as shown in Fig. 12, on the inner circumferential surface of the cylindrical valve chamber S so as to communicate with the opening 26a through which the molten resin passage 26 at the screw 12 side faces to the cylindrical valve chamber S.

In the first and second embodiments, the circumferential grooves 32 are provided on the circumferential surface of the cylindrical valve body V, but they may be provided, as shown in Figs. 13 and 14, on the inner circumference of the cylindrical valve chamber S or alternatively they may be provided both on the inner circumference of the cylindrical valve chamber S and on the outer circumference of the cylindrical valve body V. When the circumferential grooves 32 are provided on the inner circumference of the cylindrical valve chamber S in the second embodiment, the lateral groove 33a at the screw 12 side may be provided on the inner circumference of the cylindrical valve chamber S as shown in Fig. 14. It is also possible to provide the lateral groove 33a both on the inner circumference of the cylindrical valve chamber S and on the outer circumference of the cylindrical valve body V.

It will be obvious to those skilled in the art that the rotary valve of the invention is not limited to the above embodiments nor modified examples; it may of course be modified in many ways. For example, when the grooves 32, 33a and 34 are formed on the inner circumference of the cylindrical valve chamber S as shown in Figs. 12 through 14, the valve chamber may be composed of two individual parts. Another example is that in stead of making the diameter of the central part 30 of the cylindrical valve body V larger over the circumference, an area in proximity to the through hole H, especially the opening Hb at the nozzle 15 side may be upheaved to take the form of a trapezoid with the same height as that of the end parts 31. The latter case is particularly suitable for facilitating the supply of the molten resin as a lubricant between the inner circumferential surface of the cylindrical valve chamber S and the outer circumferential surface of the cylindrical valve body V and for facilitating the transmission of the resin pressure, since the circumferential grooves 32 are substantially integrally formed.

### INDUSTRIAL APPLICABILITY

According to the invention, the eccentric action on the cylindrical valve body can be restrained, and the driving torque required for the cylindrical valve body can be reduced. Therefore, the rotary valve for an injection molder of the invention is particularly suitable for the production of resinous articles with the use of molten resin having high viscosity.

## Claims

1. A rotary (21) valve for an injection molder provided with a molten resin passage into which molten resin is forced so that it flows from a screw side to a nozzle side, comprising a cylindrical valve chamber (S) having an axis in a transverse direction with respect to the molten resin passage; and a cylindrical valve body (V) disposed and fitted in the cylindrical valve chamber so as to have the same axis as that of the cylindrical valve chamber, the cylindrical valve body having a through hole (H) piercing therethrough in a radial direction so as to communicate with the molten resin passage, and being rotatable about its axis in a sliding reciprocating manner between an open-state position at which the through hole is in a communicating position to open the molten resin passage and a closed-state position at which the through hole is in a non-communicating position to close the molten resin passage, the rotary valve being characterised by:
circumferential grooves (32) provided in a circumferential surface area of the cylindrical valve body such that they extend in a circumferential direction thereof and are aligned in an axial direction thereof with the through hole between.

2. The rotary valve for an injection molder according to Claim 1, wherein the circumferential grooves provided in the circumferential surface area of the cylindrical valve body are formed on the outer circumference of the cylindrical valve body.

3. The rotary valve for an injection molder according to Claim 1, wherein the circumferential grooves provided in the circumferential surface area of the cylindrical valve body are formed on the inner circumference of the cylindrical valve chamber.

4. The rotary valve for an injection molder according to Claim 1, wherein the circumferential grooves provided in the circumferential surface area of the cylindrical valve body are formed both on the outer circumference of the cylindrical valve body and on the inner circumference of the cylindrical valve chamber.

5. The rotary valve for an injection molder according to Claim 1, comprising a first communicating path provided on the cylindrical valve body along the axis thereof for making an opening side of the through hole, which is positioned at the nozzle side when the cylindrical valve body is at the open-state position to open the molten resin passage, communicate with the circumferential grooves.

6. The rotary valve for an injection molder according to Claim 5, wherein the first communicating path is a communicating groove formed on the outer circumference of the cylindrical valve body.

7. The rotary valve for an injection molder according to Claim 5, further comprising a second communicating path provided in the circumferential surface area of the cylindrical valve body for making, when the cylindrical valve body is at the closed-state position, an opening of the through hole which is positioned at the screw side when the cylindrical valve body is at the open-state position to open the molten resin passage communicate with an opening of the molten resin passage positioned at the screw side, facing to the cylindrical valve chamber.

8. The rotary valve for an injection molder according to Claim 7, wherein the second communicating path provided in the circumferential surface area of the cylindrical valve body is formed by making the open area of the through hole at the screw side large.

9. The rotary valve for an injection molder according to Claim 7, wherein the second communicating path provided in the circumferential surface area of the cylindrical valve body is a communicating groove formed on the outer circumference of the cylindrical valve body in a circumferential direction thereof.

10. The rotary valve for an injection molder according to Claim 7, wherein the second communicating path provided in the circumferential surface area of the cylindrical valve body is a communicating groove formed on the inner circumference of the cylindrical valve chamber in a circumferential direction thereof.

## Patentansprüche

1. Drehventil (14) für eine Spritzgießeinrichtung, die mit einem Schmelzharz-Kanal versehen ist, in welchen geschmolzenes und plastifiziertes Harz gepreßt wird, damit dieses von einer Schraubspindelseite zu einer Düsenseite strömt, wobei das Drehventil eine zylindrische Ventilkammer (S) mit einer Achse, die quer zum Schmelzharz-Kanal verläuft, und einen zylindrischen Ventilkörper (V) besitzt, der in der zylindrischen Ventilkammer in der Weise angeordnet und eingepaßt ist, daß er dieselbe Achse wie die zylindrische Ventilkammer hat, wobei der zylindrische Ventilkörper eine ihn in Radialrichtung durchdringende und mit dem Schmelzharz-Kanal verbindbare Durchgangsbohrung (H) aufweist und um seine Achse gleitend hin- und herdrehbar ist zwischen einer einen offenen Zustand bildenden Stellung, in der die Durchgangsbohrung sich in einer den Schmelzharz-Kanal freigebenden Verbindungsstellung befindet, und einer einen geschlossenen Zustand bildenden Stellung, in der die Durchgangsbohrung sich in einer den Schmelzharz-Kanal verschließenden Sperrstellung befindet, wobei das Drehventil gekennzeichnet ist durch:
Umfangsnuten (32), die in einem Bereich der Umfangsfläche des zylindrischen Ventilkörpers in der Weise angeordnet sind, daß sie in einer Umfangsrichtung desselben verlaufen und in Axialrichtung nebeneinanderliegen, wobei die Durchgangsbohrung zwischen ihnen verläuft.

2. Drehventil für eine Spritzgießeinrichtung nach Anspruch 1, wobei die im Bereich der Umfangsfläche des zylindrischen Ventilkörpers angeordneten Umfangsnuten an der äußeren Umfangsfläche des zylindrischen Ventilkörpers ausgebildet sind.

3. Drehventil für eine Spritzgießeinrichtung nach Anspruch 1, wobei die im Bereich der Umfangsfläche des zylindrischen Ventilkörpers angeordneten Umfangsnuten an der inneren Umfangsfläche der zylindrischen Ventilkammer ausgebildet sind.

4. Drehventil für eine Spritzgießeinrichtung nach Anspruch 1, wobei die im Bereich der Umfangsfläche des zylindrischen Ventilkörpers angeordneten Umfangsnuten sowohl an der äußeren Umfangsfläche des zylindrischen Ventilkörpers als auch an der inneren Umfangsfläche der zylindrischen Ventilkammer ausgebildet sind.

5. Drehventil für eine Spritzgießeinrichtung nach Anspruch 1, mit einem ersten Verbindungspfad, der auf dem zylindrischen Ventilkörper in Axialrichtung ausgebildet ist und dafür sorgt, daß diejenige Durchtrittsöffnung der Durchgangsbohrung, die düsenseitig liegt, wenn der Ventilkörper sich in der offenen Stellung befindet und den Schmelzharz-Kanal öffnet, mit den Umfangsnuten in Verbindung steht.

6. Drehventil für eine Spritzgießeinrichtung nach Anspruch 5, wobei der erste Verbindungspfad eine am Außenumfang des zylindrischen Ventilkörpers ausgebildete Verbindungsnut ist.

7. Drehventil für eine Spritzgießeinrichtung nach Anspruch 5, ferner mit einem zweiten Verbindungspfad, der im Bereich der Umfangsfläche des zylindrischen Ventilkörpers ausgebildet ist und dafür sorgt, daß - wenn der zylindrische Ventilkörper sich in Schließstellung befindet - diejenige Öffnung der Durchgangsbohrung, die in der den Schmelzharz-Kanal freigebenden Öffnungsstellung des zylindrischen Ventilkörpers schraubspindelseitig liegt, mit der schraubspindelseitigen, der zylindrischen Ventilkammer zugewandten Öffnung des Schmelzharz-Kanals verbunden ist.

8. Drehventil für eine Spritzgießeinrichtung nach Anspruch 7, wobei der zweite im Bereich der Umfangsfläche des zylindrischen Ventilkörpers angeordnete Verbindungspfad dadurch gebildet ist, daß der Mündungsbereich der Durchgangsbohrung schraubspindelseitig erweitert wird.

9. Drehventil für eine Spritzgießeinrichtung nach Anspruch 7, wobei der zweite im Bereich der Umfangsfläche des zylindrischen Ventilkörpers angeordnete Verbindungspfad eine Verbindungsnut ist, die auf dem Außenumfang des zylindrischen Ventilkörpers in Umfangsrichtung ausgebildet wird.

10. Drehventil für eine Spritzgießeinrichtung nach Anspruch 7, wobei der zweite im Bereich der Umfangsfläche des zylindrischen Ventilkörpers angeordnete Verbindungspfad eine Verbindungsnut ist, die auf dem Innenumfang der zylindrischen Ventilkammer in Umfangsrichtung ausgebildet wird.

## Revendications

1. Soupape rotative (14) pour une presse d'injection pourvue d'un conduit à résine fondue dans lequel de la résine fondue est forcée de façon à couler d'un côté vis vers un côté gicleur, la soupape rotative comprenant, d'une part, une chambre de soupape cylindrique (S) ayant un axe dans une direction transversale par rapport au conduit à résine fondue, et d'autre part un corps de soupape cylindrique (V) disposé et adapté dans la chambre de soupape cylindrique de manière à avoir le même axe que la chambre de soupape cylindrique, le corps de soupape cylindrique étant percé dans une direction radiale par un trou de passage (H) pouvant communiquer avec le conduit à résine fondue, le corps de soupape cylindrique étant rotatif autour de son axe à mouvement glissant alternatif entre une position ouverte dans laquelle le trou de passage est à une position de communication pour ouvrir le conduit à résine fondue, et une position fermée dans laquelle le trou de passage est à une position de non-communication pour fermer le conduit à résine fondue, la soupape rotative étant caractérisée par:
des rainures circonférentielles (32) agencées dans une zone de la surface circonférentielle du corps de soupape cylindrique de manière à s'étendre dans une direction circonférentielle de celui-ci en étant alignées dans une direction axiale de celui-ci, le trou de passage étant disposé entre les rainures circonférentielles.

2. La soupape rotative pour une presse d'injection selon la revendication 1, dans laquelle les rainures circonférentielles agencées dans la zone de la surface circonférentielle du corps de soupape cylindrique sont formées sur la circonférence extérieure du corps de soupape cylindrique.

3. La soupape rotative pour une presse d'injection selon la revendication 1, dans laquelle les rainures circonférentielles agencées dans la zone de la surface circonférentielle du corps de soupape cylindrique sont formées sur la circonférence intérieure de la chambre de soupape cylindrique.

4. La soupape rotative pour une presse d'injection selon la revendication 1, dans laquelle les rainures circonférentielles agencées dans la zone de la surface circonférentielle du corps de soupape cylindrique sont formées et sur la circonférence extérieure du corps de soupape cylindrique et sur la circonférence intérieure de la chambre de soupape cylindrique.

5. La soupape rotative pour une presse d'injection selon la revendication 1, comprenant un premier chemin de communication disposé sur le corps de soupape cylindrique le long de son axe pour faire communiquer les rainures circonférentielles avec une embouchure du trou de passage, à savoir l'embouchure disposée du côté gicleur quand le corps de soupape cylindrique est à la position ouverte pour ouvrir le conduit à résine fondue.

6. La soupape rotative pour une presse d'injection selon la revendication 5, dans laquelle le premier chemin de communication est constitué par une rainure de communication agencée dans la circonférence extérieure du corps de soupape cylindrique.

7. La soupape rotative pour une presse d'injection selon la revendication 5, comprenant en plus un deuxième chemin de communication disposé dans la zone de la surface circonférentielle du corps de soupape cylindrique pour faire communiquer, quand le corps de soupape cylindrique est à la position fermée, une embouchure du trou de passage disposée du côté vis quand le corps de soupape cylindrique est à la position ouverte pour ouvrir le conduit à résine fondue, avec une ouverture du conduit à résine fondue disposée du côté vis et exposée à la chambre de soupape cylindrique.

8. La soupape rotative pour une presse d'injection selon la revendication 7, dans laquelle le deuxième chemin de communication agencé dans la zone de la surface circonférentielle du corps de soupape cylindrique est formé en élargissant l'embouchure du trou de passage du côté vis.

9. La soupape rotative pour une presse d'injection selon la revendication 7, dans laquelle le deuxième chemin de communication agencé dans la zone de la surface circonférentielle du corps de soupape cylindrique est constitué par une rainure de communication formée sur la circonférence extérieure du corps de soupape cylindrique dans une direction circonférentielle de celui-ci.

10. La soupape rotative pour une presse d'injection selon la revendication 7, dans laquelle le deuxième chemin de communication agencé dans la zone de la surface circonférentielle du corps de soupape cylindrique est constitué par une rainure de communication formée sur la circonférence intérieure de la chambre de soupape cylindrique dans une direction circonférentielle de celle-ci.
